## Europäisches Patentamt
## European Patent Office
## Office européen des brevets

(19)

(11) Veröffentlichungsnummer: **0 286 707 B1**

(12) # EUROPÄISCHE PATENTSCHRIFT

(45) Veröffentlichungstag der Patentschrift: **15.01.92**

(51) Int. Cl.5: **B01D 21/00**, B01D 21/01, B01D 21/24

(21) Anmeldenummer: **87105622.2**

(22) Anmeldetag: **15.04.87**

(54) **Verfahren zur Abtrennung von Feststoffen aus Flüssigkeiten unter Verwendung eines Kreuzstromabscheiders und Vorrichtung zur Durchführung des Verfahrens.**

(43) Veröffentlichungstag der Anmeldung:
**19.10.88 Patentblatt 88/42**

(45) Bekanntmachung des Hinweises auf die Patenterteilung:
**15.01.92 Patentblatt 92/03**

(84) Benannte Vertragsstaaten:
**AT BE CH DE ES FR GB IT LI NL SE**

(56) Entgegenhaltungen:
**EP-A- 0 052 245**
**DE-A- 2 160 159**
**FR-A- 2 251 346**
**US-A- 2 869 728**

(73) Patentinhaber: **Miljoevern Umwelt-Technik GmbH**
**Bredenscheider Strasse 89**
**W-4320 Hattingen(DE)**

Patentinhaber: **Schade, Horst Dipl.-Ing.**
**In der Marpe 16**
**W-4320 Hattingen(DE)**

(72) Erfinder: **Schade, Horst**
**In der Marpe 16**
**W-4320 Hattingen(DE)**
Erfinder: **Sapulak, Adam**
**ul. Siewna 23/89**
**PL-31-231 Krakow(PL)**

(74) Vertreter: **Finkener und Ernesti Patentanwälte**
**Heinrich-König-Strasse 119**
**W-4630 Bochum 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Abtrennung von Feststoffen aus Flüssigkeiten oder zur Trennung nicht miteinander mischbarer Flüssigkeiten unterschiedlicher Dichte unter Verwendung eines in einem Behandlungsraum angeordneten Kreuzstromabscheiders, bei dem die mit einem Flockungsmittel flockierte Flüssigkeit nach dem Eintritt in den Behandlungsraum zunächst eine Zuführkammer durchströmt, aus der sie über eine mit Löchern versehene Verteilerwand in den mit einem Plattenpaket versehenen Behandlungsraum eintritt, aus dem sie nach Durchströmen eines Lochblechs über eine Abzugskammer in den Kanal gelangt. Gegenstand der Erfindung ist ferner eine Vorrichtung zur Durchführung des Verfahrens.

Ein Verfahren der vorstehend beschriebenen Art sowie eine Vorrichtung zu dessen Durchführung sind aus der DE-A-21 60 159 bekannt.

In der Abwassertechnik werden in den letzten Jahren in zunehmendem Maße Parallelplattenabscheider eingesetzt, um Feststoffe von Flüssigkeiten abzutrennen oder unlösliche Flüssigkeiten unterschiedlicher Dichte, z. B. Öl/Wasser-Gemische voneinander zu trennen. Eine zusammenfassende Darstellung des Wissenstandes über Abscheider mit Lamellen und kastenförmigen Durchflußprofilen ist in der Zeitschrift "Korrespondenz Abwasser" 11/80, 27. Jahrgang, Seiten 773 bis 777 veröffentlicht worden.

Der Absetzungsvorgang und der Wirkungsgrad der Abscheidesysteme werden bei gleichen Prozeßparametern durch die Flächenbeschickung, die Fließgeschwindigkeit, die Turbulenz, die Beckenabmessungen und -form sowie die Ausbildung der Ein- und Ablaufvorrichtungen bestimmt. Bisher wurden vier Abscheidesysteme zur Trennung von Feststoffen und Flüssigkeiten eingesetzt, die im Gleichstrombetrieb, im Gegenstrombetrieb, im Diagonalstrombetrieb und im Kreuzstrombetrieb arbeiten.

Beim Gleichstrombetrieb wird die Suspension von oben zugeführt, so daß die Trägerflüssigkeit und der Feststoff gleichsinnig zum unteren Ende der Durchflußprofile strömen. Dieses System hat den Vorteil, daß der Abwasserdurchfluß die Schlammräumung unterstützt. Nachteile ergeben sich durch größere Störanfälligkeit wegen der unmittelbaren Nachbarschaft von Klarwasserabfluß und Schlammabzug in die Schlammtaschen sowie Verstopfungsgefahr bei Unterbelastung und Neigungswinkeln unter 55°.

Beim Gegenstrombetrieb wird die Suspension unten zugeführt und der Klarwasserabfluß und der Schlammkonus sind entgegengesetzt angeordnet, was sich auf die Abscheidung günstig auswirkt; andererseits wird der Schlammräumungsvorgang vom Durchfluß beeinträchtigt. Bei diesem System können die Abstände zwischen den Platten, da keine Schlammtasche benötigt wird, geringer sein. Die Plattenneigung muß wegen der Gegenläufigkeit der Strömungen theoretisch größer sein als bei Abscheidern nach dem Gleichstromprinzip. Im Vergleich mit dem Gleichstrombetrieb sind größere Belastungsschwankungen möglich, ohne daß Verstopfungen auftreten.

Beim Diagonalstrombetrieb wird die Suspension in der Regel über eine Tauchwand unten auf einer Seite des Paketes aufgegeben und diagonal dazu das Klarwasser oben über eine Überlaufrinne abgezogen. Der Feststoff fließt wie beim Gegenstrombetrieb senkrecht von oben nach unten unter einem Winkel von 55 bis 60° Neigung in die Schlammkonen. Nachteilig ist bei diesem System die undifferenzierte Strömungsführung, da eine gleichmäßige Verteilung über die effektive Absetzfläche konstruktiv nicht gewährleistet werden kann. Das System wird wegen der einfachen Bauart zur Klärung anorganisch verschmutzter Abwässer in großem Umfange eingesetzt.

Beim Kreuzstrombetrieb erfolgt die Flüssigkeitsströmung senkrecht zur Gleitbewegung des Schlammes und eventuell vorhandener Leichtstoffe. Bei diesem System ist besonders wichtig, eine möglichst gleichmäßige Verteilung der Suspension über die Einströmfläche zu gewährleisten. Mit dieser Betriebsweise können die Vorzüge des Gleich- und Gegenstrombetriebes erreicht werden, ohne deren Nachteile in Kauf nehmen zu müssen. Im Kreuzstrombetrieb fließt das Abwasser parallel zu der Ebene aber senkrecht zu den Absetzflächen, die üblicherweise gewellt sind. Die dabei benutzten Lamellenpakete bestehen meist aus glasfaserverstärktem Kunststoff, wie z.B. PVC oder auch aus Edelstahl und haben rechteckige, kreisförmige, meist wellenförmige Querschnitte. Sonderformen mit quadratischen Strömungsquerschnitten und versetzt angeordneten Gleitbahnen werden in Paketform mit ausreichender Festigkeit hergestellt. Da beim Kreuzstrombetrieb der absinkende Schlamm senkrecht zur Abwasserrichtung fließt, wird die Schlammbewegung durch die Wasserströmung kaum beeinträchtigt. In den Wellentälern bilden sich Schlammzonen oder Totzonen, in denen kaum eine Strömung auftritt. Die feinsten Teilchen, die doch noch von der Strömung mitgerissen werden, stoßen sofort auf die steigende Wellenfläche und sinken zurück. Die Klarwasserzone und die Schlammzone haben einen ausreichenden Abstand voneinander, so daß eine gleichmäßige Verteilung einfacher zu realisieren ist als beim Gleichstrom- oder Diagonalbetrieb. Gegenüber den vorstehend erwähnten bekannten Systemen hat das Kreuzstromsystem den Vorteil, daß die Sedimentationsbedingungen im Gegensatz zum Gegenstrombetrieb besser sind und verglichen mit dem Gleichstrom- und Diagonalstrom-System die Strömungsverteilung vorteilhafter ist.

Die bei der Verwendung von Kreuzstromabscheidern auftretenden Probleme sind in den letzten Jahren in der Literatur mehrfach erörtert worden, beispielsweise in einem Aufsatz mit dem Titel "Die neue Abwasserreinigung der Raffinerie Hamburg/Harburg der deutschen Shell AG", der in der Zeitschrift Gas- und Wasserfach (1963) 104. Jahrgang, Heft 4, Seiten 94 bis 96 veröffentlicht wurde. Bei dem dort beschriebenen System werden schräggestellte Wellplatten benutzt; das zu behandelnde Wasser wird im Einlauf gegen die Strömungsrichtung vor eine Prallwand aufgegeben, so daß die Strömung sich mehr oder weniger gleichmäßig über den Querschnitt des Paketes verteilt und dieses in horizontaler Richtung durchströmt. In der Broschüre "Technik und Umweltschutz", die im Jahre 1976 vom VEB Deutscher Verlag für Grundstoffindustrie, Leipzig, herausgegeben wurde, wird in einem Aufsatz mit dem Titel "Behandlung und Verwertung kommunaler Abwasserschlämme" ein Abscheider beschrieben, der nach dem Kreuzstromprinzip arbeitet und bei dem das zu behandelnde Wasser dem Wellplattenpaket ebenfalls über einen Prallteller und ein Leitblech zugeführt wird.

Gegenstand der DE-A-33 07 673 ist ein Plattenabscheider der Querstrom-Bauweise, bei der Strömungs-Verteilergitter zur Erzielung einer gleichmäßigen Verteilung der Flüssigkeit über die Einlaßseite der Plattenpakete vorgesehen sind. Dabei bestehen die Gitter aus im wesentlichen waagerechten Gitterstangen aus Rohren, die parallel zur Einlaßfläche oder auch geneigt dazu angeordnet werden sollen.

Der Erfindung liegt die Erkenntnis zugrunde, daß bei der Konstruktion der bekannten Kreuzstromabscheider der Gesamtvorgang der Abscheidung, der neben den Parametern des Abscheidesystems auch die Prozeßparameter berücksichtigen muß, nicht genügend beachtet wurde und daß es möglich ist, durch eine neue Verfahrensführung und konstruktive Änderungen, insbesondere im Bereich der Zuführkammer die der Erfindung zugrundeliegende Aufgabe zu lösen, die Belastung des Plattenpaketes zu vergleichmäßigen, ohne daß es zu Verstopfungen kommt, die Flockung in einem vorgeschalteten Röhrenflockulator durch gleichmäßige hydraulische Verhältnisse und kontinuierlichen Betrieb zu optimieren und den Gesamtvorgang der Abscheidung erheblich zu verbessern.

Ausgehend von einem Verfahren der eingangs beschriebenen Art besteht die Erfindung darin, daß die dem Behandlungsraum kontinuierlich zugeführte Flüssigkeit im Strömungsbereich der Zuführkammer eine Mindestaufenthaltszeit von 2 bis 3 Minuten hat, daß die Geschwindigkeit der Flüssigkeit in den Löchern der Verteilerwand 20 bis 30 mm/sec. beträgt und daß die Geschwindigkeit der Flüssigkiet in den Löchern des Lochbleches zwischen dem Behandlungsraum und der Abzugskammer 40 bis 50 mm/sec. beträgt. Dabei werden die Hauptmenge der von der zu behandelnden Flüssigkeit abzutrennenden Teilchen, vorzugsweise 80 % der Teilchen, in der Zuführkammer und der Rest von ca. 20 % in dem Plattenpaket abgetrennt.

Die Erfindung sieht ferner vor, daß die zu behandelnde Flüssigkeit vor dem Eintritt in den Behandlungsraum mittels einer Pumpe mit konstanter Fördermenge, die die Flüssigkeit aus dem Reaktions- oder Vorlagebehälter abzieht, durch einen Röhrenflockulator geleitet wird, daß der sich in dem Plattenabscheider abscheidende und sich unterhalb der Plattenpakete ansammelnde Schlamm ganz oder teilweise über eine Kreislaufleitung vor der Förderpumpe in die zu behandelnde Flüssigkeit zurückgeleitet wird und daß der Flüssigkeitsstand in dem Reaktionsbehälter über ein in der Kreislaufleitung vorgesehenes Ventil konstant gehalten wird, das über einen Schwimmer des Reaktionsbehälters gesteuert wird. Vorzugsweise erfolgt der Abzug des sich unterhalb der Plattenpakete ansammelnden Schlammes kontinuierlich, während der Abzug des Schlammes aus der Zuführkammer durch pneumatisch gesteuerte Ventile schockweise in einem Zeitraum von 5 bis 30 Minuten während eines Zeitraumes von jeweils 10 bis 30 Sekunden erfolgt.

Die Erfindung betrifft ferner eine Vorrichtung zur Durchführung des Verfahrens bestehend aus einem Kreuzstromabscheider, der eine Anzahl von im Abstand voneinander angeordneten, insbesondere gewellten Platten enthält, die in Längsrichtung der Wellenberge in einem Winkel von 45 bis 70° zur Waagerechten geneigt verlaufen, sowie einer dem Plattenpaket vorgeschalteten Zuführkammer und einer dieser nachgeschalteten mit dem Kanal verbundenen Abzugskammer, wobei zwischen dem Plattenpaket und der Zuführkammer und zwischen dem Plattenpaket und der Abzugskammer eine aus einem Lochblech bestehende Verteilerwand angebracht ist und unterhalb der Plattenpakete konische Absetzräume für die abgetrennten Stoffe vorgesehen sind. Die Erfindung sieht vor, daß der untere Teil der Zuführkammer konusförmig ausgebildet ist, wobei die schräg verlaufenden Wandabschnitte mit der Waagerechten einen Winkel von mindestens 45°, vorzugsweise mehr als 60° bilden, daß die Größe der Löcher der zwischen dem Plattenpaket und der zuführkammer angebrachten Verteilerwand ca. 10 bis 13 mm beträgt und daß die Löcherdes zwischen der Auslaufseite des letzten Plattenpaketes und der Abzugskammer angebrachten Lochblechs einen Durchmesser von ca. 5 bis 10 mm haben.

Gemäß einem weiteren Merkmal der Erfindung ist in der Abzugskammer des Behandlungsbehälters, aus dem die Flüssigkeit über ein Wehr in den Kanal übertritt, eine vorzugsweise höhenverstellbare Tauchwand angeordnet, die sich etwa bis zur halben Tiefe des Lochbleches erstreckt und an ihrem unteren Rand mit einem Zackenwehr versehen ist. Ferner sieht die Erfindung vor, daß der Freiraum zwischen den konusförmig verlaufenden Abschnitten der Zuführkammer und den konischen Absetzräumen als Schlammvorlage dient, in die der aus dem Absetzraum der Zuführkammer und gegebenenfalls den Absetzräumen der Plattenpakete abgezogene Schlamm eingeführt wird. Es hat sich ferner als zweckmäßig erwiesen, in der Zuführkammer gegenüber der Eintrittsöffnung für die zu behandelnde Flüssigkeit ein oder mehrere Pralltöpfe anzuordnen, die die eintretende Flüssigkeit zunächst in Richtung der Einlaufwand umlenken, bevor sie über die Verteilerwand in das Plattenpaket eintritt.

Auf der Zeichnung sind zwei Ausführungsbeispiele einer Anlage zur Durchführung des erfindungsgemäßen Verfahrens schematisch dargestellt.

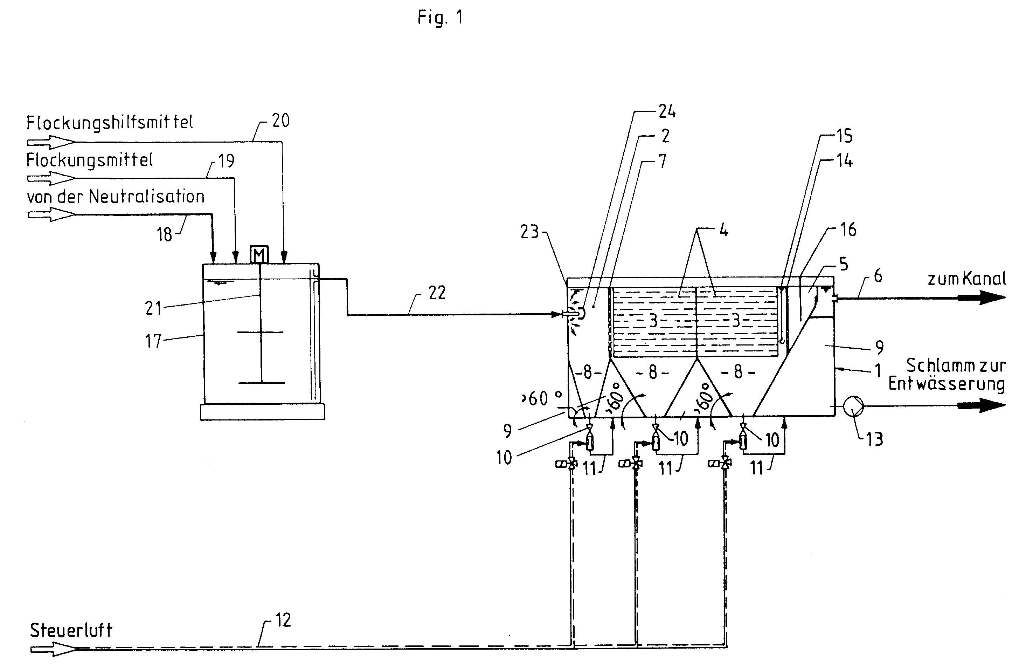

Fig. 1 zeigt das Schema einer Anlage zum Abtrennen von Feststoffen aus einer Flüssigkeit in einem Behandlungsbehälter (1), der in einer äußerst kompakten Bauweise mit einer Höhe von z. B. 1,5 m ausgeführt werden kann. Er enthält eine Zuführkammer (2), eine mittlere Kammer (3), in der zwei Weilplattenpakete (4) angeordnet sind und eine Abzugskammer (5), aus der die gereinigte Flüssigkeit in üblicher Weise über ein Wehr in eine Sammelrinne gelangt, aus der sie über die Leitung (6) in den Kanal geleitet wird. Mit (7) ist eine Verteilerwand bezeichnet, die aus einem Lochblech besteht, das mit Löchern versehen ist, die einen Durchmesser von etwa 10 bis 13 mm haben. über dieses Lochblech tritt die Flüssigkeit aus der Zuführkammer in den mittleren Raum (3) über. Ausgehend von der Höhe des unteren Randes des Lochbleches (7) verlaufen die Wandungen der Zuführkammer und der Räume, in denen die Plattenpakete angeordnet sind, unter Bildung eines Spitzkonus mit einem Winkel von vorzugsweise über 60° schräg nach unten. Die mit (8) bezeichneten konusförmigen Räume bilden Absetzräume, in denen sich die abgetrennten Feststoffe als Schlamm sammeln. Die zwischen den konusförmigen Räumen gebildeten Hohlräume (9) dienen als Schlammvorlage; die Überführung der sich absetzenden Feststoffe aus den Räumen (8) in die Schlammvorlage erfolgt über mit Ventilen (10) absperrbare Leitungen (11) mit Druckluft aus der Leitung (12). Der in der Schlammvorlage gesammelte Schlamm wird über eine Abzugsleitung mittels einer Pumpe (13) zur Entwässerung abgezogen.

Mit (14) ist ein Lochblech bezeichnet, daß die Abzugskammer (5) von dem mittleren, die Plattenpakete enthaltenden Raum (3) trennt. Es dient zur gleichmäßigen Verteilung der durchströmenden Flüssigkeit und enthält Löcher mit einem Durchmesser von 5 bis 10 mm. Zwischen dem Lochblech (14) und dem in Strömungsrichtung letzten Plattenpaket befindet sich eine Einrichtung (15) zum Abziehen von Leichtstoffen von der Oberfläche des Flüssigkeitsspiegels. Um die Strömung in der Abzugskammer (5) zu vergleichmäßigen, ist in der Kammer eine Tauchwand (16) angeordnet, deren untere sich etwa in der halben Höhe des Lochbleches erstreckende Kante mit einem Zackenwehr versehen ist.

Die Vorrichtung arbeitet wie folgt:
Die zu behandelnde Flüssigkeit wird einem Flokkungsbehälter (17) entnommen, dem die von einer Neutralisationsanlage kommende Flüssigkeit über die Leitung (18), ein Flockungsmittel über die Leitung (19) und ein Flockungshilfsmittel über die Leitung (20) zugeführt wird. Die Flockung wird durch ein Rührwerk (21) unterstützt. Die geflockten Feststoffe und die Flüssigkeit gelangen über die Leitung (22) in die Zuführkammer (2). Gegenüber der in der Einlaufwand (23) vorgesehenen Eintrittsöffnung sind Pralltöpfe (24) angeordnet, durch die die eintretende Flüssigkeit zunächst in Richtung der Einlaufwand umgelenkt wird, um dann den Behandlungsbehälter in horizontaler Richtung, verteilt auf den ganzen freien Lochblechquerschnitt, zu durchströmen.

Erfindungsgemäß sind die Abmessungen der Zuführkammer unter Berücksichtigung der Strömungsgeschwindigkeit so berechnet, daß die Aufenthaltszeit der Flüssigkeit in der Kammer (2) mindestens 2 bis 3 Minuten beträgt, wobei die die Kammer verlassende Flüssigkeit mit einer Strömungsgeschwindigkeit von 20 bis 30 mm/sec. durch die Löcher der Verteilerwand hindurchtritt, deren Durchmesser etwa 10 bis 13 mm beträgt. Auf diese Weise wird sichergestellt, daß sich etwa 80% der abzutrennenden Feststoffe bereits in der Zuführkammer absetzen, aus deren konusförmigem Absetzraum (8) die schockweise abgezogen und in die Schlammvorlage (9) überführt werden. Der Abzug erfolgt vorzugsweise alle 5 bis 30 Minuten, während eines Zeitraumes von 10 bis 30 sec. Die restlichen Feststoffe werden beim Durchströmen der Plattenpakete (4) abgeschieden und sammeln sich in den zugehörigen Absetzräumen. Ihre Überführung in die Schlammvorlage erfolgt ebenfalls in der beschriebenen Weise. Die Durchtrittsgeschwindigkeit der Flüssigkeit durch die Löcher des Lochbleches (14), deren Durchmesser 5 bis 10 mm beträgt, liegt bei etwa 40 bis 50 mm/sec. Auf diese Weise wird ein großer Widerstand am Auslaufende der Plattenpakete erreicht und ein ausreichend großer Druckverlust im feststofffreien Wasser aufgebaut. Der Abzug der Leichtstoffe von der Oberfläche kann beispielsweise mittels einer bekannten Vorrichtung (15) erfolgen, die aus einer in der Höhe verstellbaren Rinne besteht. Durch die Tauchwand (16) wird erreicht, daß sich die Strömung in der Ablaufkammer mittig einstellt und eine Beeinflussung der Strömung durch den Ablaufsog vermieden wird.

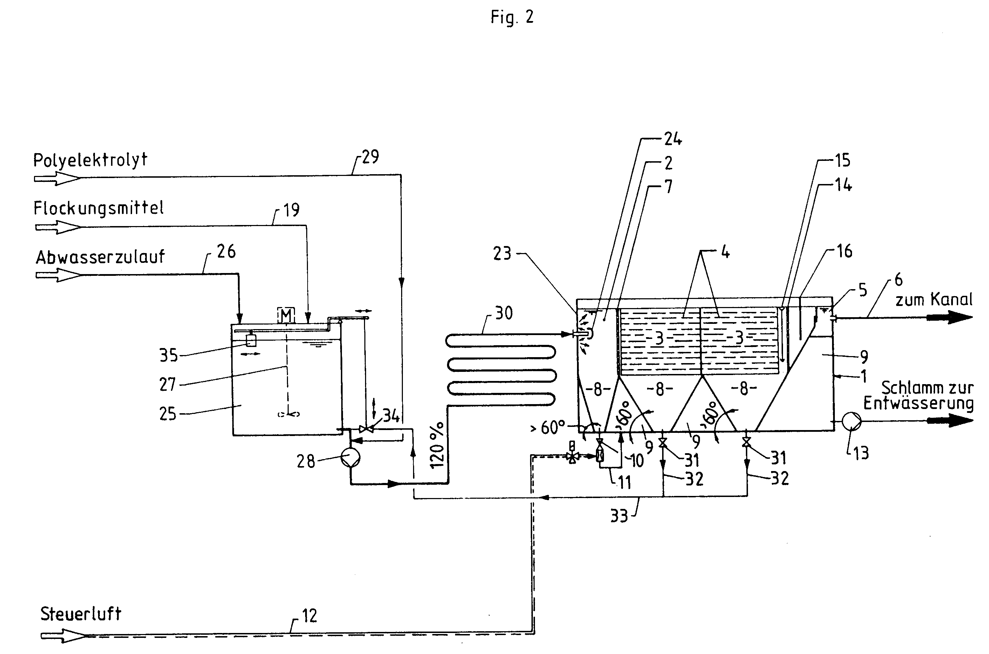

Auf Fig. 2 ist eine bevorzugte Ausführungsform einer Anlage zum Abtrennen von Feststoffen aus Flüssigkeiten schematisch dargestellt. Dabei wird ein Behandlungsraum (1) benutzt, der dem der Ausführungsform gemäß Fig. 1 entspricht. Für sich entsprechende Teile der Anordnung wurden die gleichen Bezugzeichen verwendet.

Die Behandlungsanlage, die sich für einen Durchsatz von über 10 m³/h eignet, arbeitet wie folgt:

Die zu behandelnde Flüssigkeit wird einem mit einem Rührwerk (27) versehenen Reaktionsbehälter, z.B. einem Neutralisationsbehälter (25) entnommen, dem das zu behandelnde Abwasser über eine Leitung (26) zugeführt wird. Der Abzug erfolgt kontinuierlich über eine Pumpe (28). In die Abzugsleitung mündet in Strömungsrichtung vor der Pumpe (28) eine Leitung (29), über die der Flüssigkeit ein Flockungshilfsmittel, z.B. ein Polyelektrolyt zugesetzt wird. Die Flüssigkeit durchströmt einen Röhrenflockulator (30) bevor sie in den Behandlungsbehälter (1) eintritt, den sie wie in Zusammenhang mit Fig. 1 beschrieben, durchströmt.

Der sich in dem konusförmigen Absetzraum (8) der Zuführkammer ansammelnde Schlamm wird über die Leitung (11) in die Schlammvorlage (9) überführt. Dagegen werden die sich in den Räumen (8) unterhalb der Plattenpakete (4) absetzenden Feststoffe über mit Ventilen (31) versehene Leitungen (32) abgezogen und über eine Kreislaufleitung (33) als Kontaktschlamm dem Wasser-Feststoff-Gemisch zugeführt. Die Leitung (33) mündet vor der Pumpe (28) in die Abzugsleitung des Reaktionsbehälters. Mit (34) ist ein Ventil bezeichnet, das über einen Schwimmer (35) gesteuert wird, über den der Flüssigkeitsstand in dem Reaktionsbehälter konstant gehalten wird. Sobald der Flüssigkeitsstand in dem Behälter (25) absinkt, wird das Ventil (34) geöffnet.

**Patentansprüche**

1. Verfahren zur Abtrennung von Feststoffen aus Flüssigkeiten oder zur Trennung nicht miteinander mischbarer Flüssigkeiten unterschiedlicher Dichte unter Verwendung eines in einem Behandlungsraum angeordneten Kreuzstromabscheiders, bei dem die mit einem Flokkungsmittel flockierte Flüssigkeit nach dem Eintritt in den Behandlungsraum zunächst eine Zuführkammer durchströmt, aus der sie über eine mit Löchern versehene Verteilerwand in den mit einem Plattenpaket versehenen Behandlungsraum eintritt, aus dem sie nach Durchströmen eines Lochblechs über eine Abzugskammer in den Kanal gelangt, dadurch gekennzeichnet, daß die dem Behandlungsraum kontinuierlich zugeführte Flüssigkeit im Strömungsbereich der Zuführkammer eine Mindestaufenthaltszeit von 2 bis 3 Minuten hat, daß die Geschwindigkeit der Flüssigkeit in den Löchern der Verteilerwand 20 bis 30 mm/sec. beträgt und daß die Geschwindigkeit der Flüssigkeit in den Löchern des Lochbleches zwischen dem Behandlungsraum und der Abzugskammer 40 bis 50 mm/sec. beträgt

2. Verfahren nach Anspruch 1, dadurch gekennzeichnet, daß die in den Behandlungsraum eintretende Flüssigkeit in Richtung der Einlaufwand umgelenkt wird und von dort nach nochmaliger Umlenkung mit verminderter Fließgeschwindigkeit der Verteilerwand zuströmt, wobei sie sich auf den gesamten offenen Querschnitt dieser Wand verteilt.

3. Verfahren nach den Ansprüchen 1 und 2, dadurch gekennzeichnet, daß die zu behandelnde Flüssigkeit vor dem Eintritt in den Behandlungsraum mittels einer Pumpe mit konstanter Fördermenge, die die Flüssigkeit aus einem Reaktions- oder Vorlagebehälter abzieht, durch einen Röhrenflockulator geleitet wird, daß der sich in dem Plattenabscheider abscheidende und sich unterhalb der Plattenpakete ansammelnde Schlamm ganz oder teilweise über eine Kreislaufleitung vor der Förderpumpe in die zu behandelnde Flüssigkeit zurückgeleitet wird und daß der Flüssigkeitsstand in dem Reaktionsbehälter über ein in der Kreislaufleitung vorgesehenes Ventil konstant gehalten wird, das über einen Schwimmer des Reaktionsbehälters gesteuert wird.

4. Verfahren nach den Ansprüchen 1 bis 3, dadurch gekennzeichnet, daß der Abzug des sich unterhalb der Plattenpakete ansammelnden Schlammes kontinuierlich erfolgt.

5. Verfahren nach den Ansprüchen 1 bis 4, dadurch gekennzeichnet, daß der Abzug des Schlammes aus der Zuführkammer durch pneumatisch gesteuerte Ventile schockweise in einem Zeitraum von 5 bis 30 Minuten während eines Zeitraumes von jeweils 10 bis 30 sec. erfolgt.

6. Vorrichtung zum Abtrennen von Feststoffen aus Flüssigkeiten oder zum Trennen nicht miteinander mischbarer Flüssigkeiten unterschiedlicher Dichte bestehend aus einem Kreuzstromabscheider, der eine Anzahl von im Abstand voneinander angeordnete, insbesondere gewellte Platten enthält, die in Längsrichtung der Wellenberge in einem Winkel von 45 bis 70° zur Waagerechten geneigt verlaufen, sowie einer dem Plattenpaket vorgeschalteten Zuführkammer und einer dieser nachgeschalteten mit einem Kanal verbundenen Abzugskammer, wobei zwischen dem Plattenpaket und der Zuführkammer und zwischen dem Plattenpaket und der Abzugskammer eine aus einem Lochblech bestehende Verteilerwand angebracht ist und unterhalb der Plattenpakete konische Absetzräume vorgesehen sind, dadurch gekennzeichnet, daß der untere Teil (8) der Zuführkammer (2) konusförmig ausgebildet ist, wobei die schräg verlaufenden Wandabschnitte mit der Waagerechten einen Winkel von mindestens 45°, vorzugsweise mehr als 60° bilden, daß die Größe der Löcher der zwischen dem Plattenpaket und der Zuführkammer angebrachten Verteilerwand (7) ca. 10 bis 13 mm beträgt und daß die Löcher des angebrachten zwischen der Auslaufseite des letzten Plattenpaketes (4) und der Abzugskammer (5) Lochblechs (14) einen Durchmesser von ca. 5 bis 10 mm haben.

7. Vorrichtung nach Anspruch 6, dadurch gekennzeichnet, daß in der Abzugskammer (5) des Behandlungsbehälters (1) eine Tauchwand (16) angeordnet ist, die sich etwa bis zur halben Tiefe des Lochbleches (14) erstreckt und an ihrem unteren Rand mit einem Zackenwehr versehen ist.

8. Vorrichtung nach Anspruch 7, dadurch gekennzeichnet, daß die Tauchwand (16) höhenverstellbar angeordnet ist.

9. Vorrichtung nach den Ansprüchen 6 bis 8, dadurch gekennzeichnet, daß der Freiraum zwischen den konusförmig verlaufenden Abschnitten der Zuführkammer (2) und den konischen Absetzräumen (8) als Schlammvorlage (9) dient.

10. Vorrichtung nach den Ansprüchen 6 bis 9, dadurch gekennzeichnet, daß in der Zuführkammer (2) gegenüber der Eintrittsöffnung für die zu behandelnde Flüssigkeit ein oder mehrere Pralltöpfe (24) angeordnet sind.

## Claims

1. Process for the separation of solid matter from fluids or for the separation of fluids of varying density which cannot be mixed together, using a cross-flow separator which is arranged in a treatment chamber, and in which the fluid which is flocculated with a flocculation agent ,after entry into the treatment chamber, initially flown through an inflow chamber, from which it flown through a distributor wall provided with apertures, into the treatment chamber provided with a set of plates, from which it enters the channel via an outflow chamber after flowing through a perforated plate, characterized in that the fluid which is continuously fed to the treatment chamber has a minimum stopping time of 2 to 3 minutes in the flow area of the inflow chamber, that the speed of the fluid in the apertures of the distributor wall is 20 to 30 mm/sec., and that the speed of the fluid in the apertures of the perforated plate between the treatment chamber and the outflow chamber is 40 to 50 mm/sec.

2. Process as claimed in Claim 1, characterized in that the fluid entering the treatment chamber is deflected in the direction of the inflow wall, and from there after repeated deflection, flows through the distributor wall at a reduced speed of flow, it being distributed over the entire open cross-section of this wall.

3. Process as claimed in Claims 1 and 2, characterized in that the fluid being treated, before entering the treatment chamber, is conveyed through a tubular flocculator by means of a pump with a constant conveying quantity, which draws off the fluid from a reaction or receiver tank, that the sludge separating in the plate separator and collecting underneath the set of plates is wholly or partially conveyed via a circuit pipeline in front of the conveying pump back into the fluid which is being treated, and that the fluid level in the reaction tank is kept constant by means of a valve which is provided in the circuit pipeline and is controlled by a float in the reaction tank.

4. Process as claimed in Claims 1 to 3, characterized in that the drawing-off of the sludge collecting underneath the set of plates takes place continuously.

5. Process as claimed in Claims 1 to 4, characterized in that the drawing-off of the sludge from the inflow chamber occurs through pneumatically controlled valves in shocks at intervals of 10 to 30 sec. in each case within a period of 5 to 30 minutes.

6. Device for separating solid matter from fluids or for separating fluids of varying density which cannot be mixed together, consisting of a cross-flow separator which comprises a number of plates which are arranged at a spacing from each other and are more especially corrugated, and which run inclined at an angle of 45° to 70° to the horizontal in the longitudinal direction of the wave crests, and also an inflow chamber connected in front of the set of plates and an outflow chamber connected after the latter and connected to a channel, wherein a distributor wall is fired between the set of plates and the outflow chamber, and conical settling chambers are provided underneath the sets of plates, characterized in that the bottom part (8) of the inflow chamber (2) is conical in design , wherein the slantingly running wall sections form with the horizontal an angle of at least 45°, and preferably more than 60°, that the size of the apertures of the distributor wall (7) fixed between the set of plates and the inflow chamber is approximately 10 to 13 mm and that the apertures of the perforated plate (14) fixed between the outflow side of the last set of plates (4) and the outlet chamber (5) have a diameter of approximately 5 to 10 mm.

7. Device as claimed in Claim 6, characterized in that there is arranged in the outlet chamber (5) of the treatment tank (1) an immersion wall (16), which extends to roughly half the depth of the perforated plate (14) and is provided with a serrated dam at its bottom edge.

8. Device as claimed in Claim 7, characterized in that the immersion wall (16) is arranged so as to be adjustable in height.

9. Device as claimed in Claims 6 to 8, characterized in that the vacant space between the conically running sections of the inflow chamber (2) and the conical settling chambers (8) serves as a sludge receiver.

10. Device as claimed in Claims 6 to 9, characterized in that one or more baffle pots (24) are arranged in the inflow chamber (2), opposite the inlet aperture for the fluid which is being treated.

**Revendications**

1. Procédé pour la séparation de matières solides à partir de liquides ou pour la séparation de liquides non miscibles entre eux de densité différente en utilisant un séparateur à courant croisé agencé dans la zone de traitement, dans lequel le liquide mis en floculation avec un agent floculant après l'entrée dans la zone de traitement traverse d'abord une chambre d'amenée à partir de laquelle il pénètre dans une zone de traitement munie d'un paquet de plaques ou lamelles et dans laquelle se trouve une paroi de distributeur munie de trous, zone de traitement à partir de laquelle après son passage dans une chambre d'extraction le liquide est amené dans le canal, caractérisé en ce que le liquide amené en continu dans la zone de traitement dans la partie d'écoulement de la chambre d'amenée séjourne au minimum de 2 à 3 minutes et en ce que la vitesse du liquide dans les trous de la paroi de distributeur est de 20 à 30 mm/seconde et en ce que la vitesse du liquide dans les trous de la tôle perforée entre la zone de traitement et la chambre d'extraction est de 50 mm/seconde.

2. Procédé selon la revendication 1, caractérisé en ce que le liquide pénétrant dans la zone de traitement est dévié en direction de la paroi d'entrée et à partir de là, après une nouvelle déviation à une vitesse d'écoulement réduite, il est amené sur la paroi de distributeur, où il se répartit sur toute la section transversale ouverte de cette paroi.

3. Procédé selon les revendications 1 et 2, caractérisé en ce que le liquide à traiter avant l'entrée dans la zone de traitement est extrait au moyen d'une pompe à débit constant, à partir d'un récipient de réaction ou de stockage, et amené par l'intermédiaire d'un floculateur tubulaire, en ce que la boue à séparer dans le séparateur à plaques et qui s'accumule audessous des paquets de plaques est entièrement ou partiellement ramenée en amont de la pompe de circulation d'alimentation dans le liquide à traiter et en ce que le niveau de liquide dans le récipient de réaction est maintenu constant par une vanne prévue dans la conduite de circulation, qui est commandée par un flotteur du réservoir de réaction.

4. Procédé selon les revendications 1 à 3, caractérisé en ce que l'extraction de la boue accumulée au-dessous des paquets de plaques s'effectue en continu.

5. Procédé selon les revendications 1 à 4, caractérisé en ce que l'extraction de la boue à partir de la chambre d'amenée s'effectue par percussions par l'intermédiaire de vannes commandées pneumatiquement en un laps de temps de 5 à 30 minutes pendant une durée de respectivement 10 à 30 secondes.

6. Dispositif pour la séparation de matières solides à partir de liquide ou pour la séparation de liquides non missibles entre eux de densité différente à partir d'un séparateur à courant croisé qui contient un certain nombre de plaques notamment ondulées séparées entre elles à une certaine distance, et qui s'étendent de façon inclinée dans le sens longitudinal des sommets des ondulations selon un angle de 45 à 70° par rapport à l'horizontal ainsi qu'une chambre d'amenée en amont du paquet de plaques et une chambre d'extraction reliée à un canal en aval de la chambre d'amenée, entre le paquet de plaques et la chambre d'amenée et entre le paquet de plaques et la chambre d'extraction une paroi de distributeur constituée par une tôle perforée étant agencée et au-dessous des paquets de plaques des zones de décantation coniques étant prévues, caractérisé en ce que la partie inférieure 8 de la chambre d'amenée 2 est de forme conique, les sections de paroi s'étendant obliquement par rapport à l'horizontal forment un angle d'au moins 45° de préférence supérieur à 60° et en ce que la dimension des trous de la paroi de distributeur 7 agencée entre le paquet de plaques et la chambre d'amenée sont d'environ 10 à 13 mm et en ce que les trous de la tôle perforée 14 entre le côté de sortie du dernier paquet de plaques 4 et la chambre d'extraction 5 ont un diamètre d'environ 5 à 10 mm.

7. Dispositif selon la revendication 6, caractérisé en ce que dans la chambre d'extraction 5 du récipient de traitement I est agencée une paroi d'immersion 16 qui s'étend environ Jusqu'à la mi-profondeur de la tôle perforée 14 et sur son bord inférieur est munie d'un déversoir à fourche.

8. Dispositif selon la revendication 7, caractérisé en ce que la paroi d'immersion 16 est agencée de façon à être réglable en hauteur.

9. Dispositif selon les revendications 6 à 8, caractérisé en ce que l'espace libre entre les sections s'étendant de façon conique de la chambre d'amenée 2 et les zones de décantation coniques 8 servent au stockage de la boue 9.

10. Dispositif selon les revendications 6 à 9, caractérisé en ce que dans la chambre d'amenée 2 en regard de l'ouverture d'entrée pour les liquides à traiter sont agencés un ou plusieurs pots

de rebondissement 24.

8

Fig. 1

Fig. 2